# EUROPEAN PATENT APPLICATION

(11) **EP 4 477 916 A1**
(43) Date of publication of application: **18.12.2024**
(21) Application number: 24173582.8
(22) Date of filing: 30.04.2024
(51) Int. Cl.: F16F 9/32, F16F 9/34, F16F 9/348

(54) **FLUID REDIRECTION SYSTEM**

(30) Priority: 07.06.2023 US 202363471720 P; 08.11.2023 US 202318387999
(71) Applicant: Fox Factory, Inc., Duluth, GA 30097 (US)
(72) Inventor: Shvytov, Igor, Duluth, 30097 (US); Coaplen, Joshua, Duluth, 30097 (US); Wright, Nathan, Duluth, 30097 (US)
(74) Representative: Greaves Brewster LLP

(57) **Abstract**

A fluid redirection system comprising:
a damper piston (200), the damper piston having a plurality of compression ports (202) and a plurality of rebound ports (204); and
a fluid ramp (516) on a first side of the damper piston (200), the fluid ramp (616) being of a shape that creates an angled exit for fluid exiting the damper piston (200).

## Description

### CROSS-REFERENCE TO RELATED APPLICATIONS

This application claims priority from U.S. provisional patent application number 63/471,720, filed on June 7, 2023, and from U.S. Utility patent application number 18/387,999 filed on November 8, 2023.

### TECHNICAL FIELD

This invention relates to a fluid redirection system, to a suspension system comprising the fluid redirection system, to a suspension-inclusive device comprising the fluid redirection system, and to a vehicle comprising the fluid redirection system.

### BACKGROUND

Dampers can be used in a variety of applications to slow the velocity of a target object.

### SUMMARY OF THE INVENTION

According to some embodiments there is provided a fluid redirection system. The fluid redirection system may comprise a damper piston. The damper piston may have a plurality of compression ports and a plurality of rebound ports. The fluid redirection system may comprise a fluid ramp on a first side of the damper piston. The fluid ramp may be of a shape that creates an angled exit for fluid exiting the damper piston.

In some embodiments the fluid ramp may comprise or consist of a round ramp.

In some embodiments the fluid ramp may comprise or consist of a bevelled ramp.

In some embodiments the fluid ramp may comprise or consist of a square ramp.

In some embodiments the fluid ramp may not be present all around the entire edge of the damper piston. Locations of the fluid ramp may be based on where fluid flows when exiting the plurality of compression ports and the plurality of rebound ports.

In some embodiments the fluid ramp may redirects fluid flow to merge more seamlessly with the boundary layer along a wall of a cylinder.

In some embodiments the fluid redirection may further comprise a second fluid ramp on a second side of the damper piston. The second fluid ramp may be of a shape that creates an angled exit for fluid exiting the damper piston.

According to some embodiments there is provided a fluid redirection system. The fluid redirection system may comprise a damper piston. The damper piston may have a plurality of compression ports and a plurality of rebound ports. The fluid redirection system may comprise a first fluid ramp on a first side of the damper piston. The first fluid ramp may be of a shape that creates an angled exit for fluid exiting the damper piston. The fluid redirection system may comprise a second fluid ramp on a second side of the damper piston. The second fluid ramp may be of a shape that creates an angled exit for fluid exiting the damper piston.

In some embodiments the first and/or second fluid ramp may comprise or consist of a round ramp.

In some embodiments the first and/or second fluid ramp may comprise or consist of a bevelled ramp.

In some embodiments the first and/or second fluid ramp may comprise or consist of a square ramp.

In some embodiments the first and/or second fluid ramp may not be present all around the entire edge of the damper piston. Locations of the first and/or second fluid ramp may be based on where fluid flows when exiting the plurality of compression ports and the plurality of rebound ports.

In some embodiments the fluid ramp may redirect fluid flow to merge more seamlessly with the boundary layer along a wall of a cylinder.

According to some embodiments there is provided a suspension system. The system may comprise a cylinder. The cylinder may comprise a wall. The system may comprise a piston shaft. The system may comprise a damper piston. The damper piston may be coupled to the piston shaft and configured for operation within the cylinder. The main damping piston may be configured to divide the cylinder into a compression side and a rebound side. The damper piston may have a plurality of compression ports and a plurality of rebound ports. The system may comprise a fluid ramp on a first side of the damper piston. The fluid ramp may be of a shape that creates an angled exit for fluid exiting the damper piston. The suspension system may be in the form or a shock assembly.

In some embodiments the fluid ramp may comprise or consist of a round ramp.

In some embodiments the fluid ramp may comprise or consist of a bevelled ramp.

In some embodiments the fluid ramp may comprise or consist of a square ramp.

In some embodiments the fluid ramp may not be present all around the entire edge of the damper piston. Locations of the fluid ramp may be based on where fluid flows when exiting the plurality of compression ports and the plurality of rebound ports.

In some embodiments the fluid ramp may redirect fluid flow to merge more seamlessly with the boundary layer along a wall of a cylinder.

In some embodiments the suspension system may comprise a second fluid ramp on a second side of the damper piston. The second fluid ramp may be of a shape that creates an angled exit for fluid exiting the damper piston.

According to some embodiments there is provided a suspension-inclusive device comprising a fluid redirection system as set out above, or as described or as claimed anywhere herein.

According to some embodiments there is provided a vehicle comprising a fluid redirection system as set out above, or as described or as claimed anywhere herein.

In some embodiments, to achieve better temperature stability or a lower steady state temperature in a shock assembly, fluid flow exiting the piston is redirected to, for example, the nearest wall region such that heat exchange occurs. By doing so, steady state temperature must decrease, which prevents a decrease in oil viscosity, therefore improving shock absorber damping capabilities.

In some embodiments the level of turbulence may be reduced and redirection of fluid momentum from a normal or direct impact (90-degree angle) into the walls of the pressure/damper tube may be accomplished. By redirecting the fluid flow and preventing a normal impact upon the interior wall of the pressure/damper tube, a "heese" noise can be reduced in both the "key" (e.g., the note or tone) and the pitch (e.g., the amplitude or volume), therefore, making the damper quieter.

By redirecting the fluid flow and preventing a Normal impact upon the interior wall of the pressure/damper tube, "heese" noise can be reduced in both the "key" (e.g., the note or tone) and the pitch (e.g., the amplitude or volume), therefore, making the damper quieter.

To redirect fluid flow, avoiding normal to the surface contact, and inject it into the near wall region (called the boundary layer) a piston feature may provided in some embodiments of the present invention. This feature may be referred to as a "fluid ramp" or a "fluid skirt". The fluid ramp of various embodiments may redirect the fluid flow by providing smooth turning transition between the piston exit and the interior wall of damper. Therefore, in embodiments of the present invention, the fluid flow is being redirected or guided such that the fluid flow is inserted into the boundary layer residing along interior wall of damper along the shock body, which may further improve heat exchange with the wall of the damper and may reduce concentrated shear force at the point of contact between the fluid flow and the interior wall of the damper. By varying the angle of the fluid ramp (or ramp's radius), the fluid flow path may be altered, which results in a different amplitude of "heese" noise. Adding the fluid ramp to the piston does may not reduce damper performance. On the contrary, it may increase damper performance thereby providing a smooth feeling and improved damping.

Other noise contributors in conventional dampers include an oil cavitated area between the pressure/damper tube wall and the piston. More particularly such cavitation often occurs in the region located below the exiting jet of fluid and between the pressure/damper tube wall and the piston. Some embodiments may reduce such cavitation and, thereby, reduce damper noise. For example in some embodiments there may be a reduced area between the pressure/damper tube wall and the piston.

In some embodiments, fluid flow redirection may be achieved using a small guide or other features instead of using a full ramp structure. In some embodiments the piston channel geometry may be designed such that fluid flow is inserted into the boundary layer. The fluid ramp may comprise other non-radius-based shapes. For example it can be a rough chamfer turn, or even a block shape, or any shape that results in the fluid jet being turned from its exiting velocity vector to other directions.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

The accompanying drawings, which are incorporated in and form a part of this specification, illustrate embodiments of the present technology and, together with the description, serve to explain the principles of the present technology.
Figure 1 is a perspective view of a shock assembly, in accordance with an embodiment.
Figure 2 is a perspective view of a damper piston without a fluid ramp, in accordance with an embodiment.
Figure 3 is a cross sectional view of damper piston without a fluid ramp during a compression stroke, in accordance with an embodiment.
Figure 4 is a close-up view of the cross-sectional view of damper piston without a fluid ramp during a compression stroke, in accordance with an embodiment.
Figure 5 is a perspective view of a damper piston with a fluid ramp, in accordance with an embodiment.
Figure 6 is a cross section view of a damper piston with a fluid ramp during a compression stroke, in accordance with an embodiment.
Figure 7 is a cross section view of a damper piston with a fluid ramp during a compression stroke, in accordance with an embodiment.
Figure 8 is a cross section view of a damper piston with a fluid ramp during a compression stroke, in accordance with an embodiment.
Figure 9 is a cross section view of a damper piston with a fluid ramp during a compression stroke, according to an embodiment.
Figure 10 is a cross section view of a shock assembly with a damper piston with a fluid ramp, according to an embodiment.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

In general, a suspension system for a vehicle provides a motion modifiable connection between a portion of the vehicle that is in contact with a surface (e.g., an unsprung portion) and some or all of the rest of the vehicle that is not in contact with the surface (e.g., a suspended portion). For example, the unsprung portion of the vehicle that is in contact with the surface can include one or more wheel(s), skis, tracks, hulls, etc., while some or all of the rest of the vehicle that is not in contact with the surface include suspended portions such as a frame, a seat, handlebars, engines, cranks, etc.

The suspension system will include one or numerous components which are used to couple the unsprung portion of the vehicle (e.g., wheels, skids, wings, belt, etc.) with the suspended portion of the vehicle (e.g., seat, cockpit, passenger area, cargo area, etc.). Often, the suspension system will include one or more shock assemblies which are used to reduce feedback from the unsprung portion of the vehicle before that feedback is transferred to the suspended portion of the vehicle, as the vehicle traverses an environment. However, the language used by those of ordinary skill in the art to identify a shock assembly used by the suspension system can differ while referring to the same (or similar) types of components. For example, some of those of ordinary skill in the art will refer to the shock assembly as a shock absorber, while others of ordinary skill in the art will refer to the shock assembly as a damper (or damper assembly).

In its basic form, the suspension is used to increase ride comfort, performance, endurance, component longevity and the like. In general, the force of jarring events, rattles, vibrations, jostles, and the like which are encountered by the portion of the vehicle that is in contact with the surface are reduced or even removed as it transitions through the suspension before reaching suspended portions of the vehicle to include components such as seats, steering wheels/handlebars, pedals/foot pegs, fasteners, drive trains, engines, and the like.

For example, on a wheeled vehicle, a portion of the wheel (or tire) will be in contact with the surface being traversed (e.g., pavement, dirt, gravel, sand, mud, rocks, etc.) while a shock assembly and/or other suspension system components will be coupled between a wheel retaining assembly and the suspended portion of the vehicle (often a portion of the vehicle frame and associated systems, the seat, handlebars, pedals, controls, steering wheel, interior, etc.).

In a snow machine, a portion of the track and/or the skis that will be in contact with the surface being traversed (e.g., snow, ice, etc.) while a shock assembly and/or other suspension components will be coupled between a track retaining assembly (and similarly the skis retaining assembly) and the suspended portion of the vehicle (usually including the engine and associated systems, the seat, handlebars, etc.).

In a boat or PWC vehicle, a portion of the hull will be in contact with the surface of the water while a shock assembly and/or other suspension components will be coupled between the hull and the suspended portion(s) of the vehicle (such as the seat, the handlebars, a portion of the vehicle frame, and/or the like).

In an airplane in flight, it is the airframe that is in contact with the surface being traversed (e.g., the air) while a shock assembly and/or other suspension components will be coupled between the airframe and the suspended portion(s) of the vehicle (such as the seats and the like).

As vehicle utilization scenarios change, one or more shock assemblies of the suspension system can be adjusted for different characteristics based on the use type of the vehicle, terrain, purpose (e.g., rock crawl, normal use, race set-up, etc.), and the like. For example, a downhill mountain bike rider (motocross rider, off-road truck driver, side-by-side rider, snow machine racer, etc.) would want a suspension configuration with a large range of motion and aggressive rebound and compression speeds to maintain as much contact as possible between the tires and the ground by absorbing the terrain events such as bumps, ruts, roots, rocks, dips, etc. while reducing the impacts felt at the suspended portion and also have the suspension return to its SAG setting as quickly as possible in preparation for the next encounter.

In contrast, a street bike racer (track racing vehicle, boat/PWC racer, etc.) would want a firmer suspension configuration with a very small range of motion to provide feel for the grip of the tire, maintain friction and/or aerodynamic geometries, and the like, in order to obtain the maximum performance from the vehicle.

In a normal use scenario, such as a trip to the local store, a ride around town or on a path, a drive to grandma's house, a boat ride out on a lake, etc., one choice for the suspension configuration would be based on providing the most comfort.

In one embodiment, there may be times where changes to a suspension component are desired during a given ride/drive. For example, a bike rider in a sprinting scenario would often want to firm up or possibly even lockout the suspension component to remove the opportunity for rider induced pedal bob. Similarly, a ride/drive from a paved road to an off-road environment (or vice-versa) would also be a time when a change to one or more suspension component settings is valuable.

With respect to the term lockout, for purposes of the following discussion, lockout refers to the most restricted flow state attainable or desirable. Thus, in one embodiment, lockout refers to a stoppage of all fluid flow through a given fluid path. However, in another embodiment, lockout does not stop all the fluid flow through a given fluid path. For example, a manufactured component may not be able to stop all fluid flow due to tolerances, or a manufacturer (designer, etc.) may not want to stop all fluid flow for reasons such as lubrication, cooling, etc. Similarly, a lockout state could be a "perceived lockout"; that is, the flow area through a flow path of the shock assembly has been reduced to a minimum size for a given shock assembly, machine, environment, speed, performance requirement, etc. For example, in one "perceived lockout" most, but not all, of the fluid flow is minimized while in another "perceived lockout" the fluid flow is reduced by only half (or a third, quarter, three-quarters, or the like).

In the following discussion, the term ride height refers to a distance between a portion of a vehicle and the surface across which the vehicle is traversing. Often, ride height is based on one or more of a number of different measurements such as, but not limited to, a distance between a part of the vehicle and the ground, a measurement between the top of an unsprung portion of a vehicle and a suspended portion of the vehicle there above, etc. For example, a portion of the wheel(s) (or ski, track, hull, etc.) will be in contact with the surface, while one or more shock assemblies and/or suspension components maintain the suspended portion of the vehicle a certain height there above.

In one embodiment using a wheeled vehicle example, a portion of the wheel will be in contact with the surface while a shock assembly and/or other suspension components will be coupled between a wheel retaining assembly and the suspended portion of the vehicle (often a portion of the vehicle frame). The ride height is established by the geometries of the shock assembly and/or other suspension components, the wheel retaining assembly, the wheel and tire profile, and the like.

Similarly, in a snow machine, a portion of the track (and similarly the skis) will be in contact with the surface while a shock assembly and/or other suspension components will be coupled between a track retaining assembly (and similarly the skis retaining assembly) and the suspended portion of the vehicle (often a portion of the vehicle frame). Here again, the ride height is established by the geometries of the shock assembly and/or other suspension components, the track and ski retaining assemblies, the track and/or ski profile, and the like.

In one embodiment, such as a boat or PWC vehicle, a portion of the hull will be in contact with the surface of the water while a shock assembly and/or other suspension components will be coupled between the hull and the suspended portion(s) of the vehicle (such as the seat, the handlebars, a portion of the vehicle frame, and/or the like). Here again, the ride height is established by the geometries of the shock assembly and/or other suspension components, with respect to the hull and the suspended portion(s) of the vehicle.

The term initial SAG settings or "SAG" refers to a pre-defined vehicle ride height and suspension geometry based on the initial compression of one or more shock assemblies of the suspension system for a given vehicle when it is within its normal load envelope configuration (e.g., with a rider/driver and any initial load weight). Once the SAG is established for a vehicle, it will be the designated ride height of the vehicle, until and unless the SAG is changed.

The initial SAG for a vehicle is usually established by the manufacturer. The vehicle SAG can then be modified and/or adjusted by an owner, a mechanic, or the like. For example, an owner can modify the SAG to designate a new normal ride height based on a vehicle use purpose, load requirements that are different than the factory load configuration, an adjustment modification and/or replacement of one or more of the suspension components, a change in tire size, a performance adjustment, aesthetics, and the like.

In one embodiment, the initial manufacturer will use SAG settings resulting in a preestablished vehicle ride height based on vehicle use, size, passenger capacity, load capacity, and the like. For example, a truck (side-by-side, car, or the like) may have a preestablished SAG based on an expected load (e.g., a number of passengers, an expected cargo requirement, etc.).

Regardless of the vehicle type, once the SAG is established, in a static situation the ride height of the expectedly loaded vehicle should be at or about the established SAG. When in motion, the ride height will change as the vehicle travels over the surface, and while the suspension system is used to reduce the transference of any input forces received from the surface to the rest of the vehicle it is also used to maintain the vehicle's SAG.

However, when additional weight is added to the vehicle, the suspension and one or more shock assemblies will be compressed, and the vehicle ride height will be less than the SAG.

For example, if a vehicle such as a snow machine, PWC, boat, motorcycle, or bicycle is loaded with an additional 100 lbs. of cargo in the rear, the extra 100-pound load will cause shock assembly compression (and the like) thereby causing the vehicle to ride lower in the rear (or to ride in a bow up orientation). In general, skewed rear-low ride height will move the vehicle out of SAG and change the vehicle geometry, e.g., cause a slant upward from rear to front. Often, an out of SAG condition is visually identifiable and in this particular example can result in lightness in steering, rear suspension bottom out, forward visual obstruction, and the like.

In one embodiment, for example in a side-by side that is loaded with 250 lbs. of additional weight, the additional weight will reduce the available operating length of one or more suspension components which can be detrimental to steering and performance characteristics, could cause an unwanted impact between wheel (or wheel suspension) and frame, increase the roughness of the ride, increase suspension stiffness, result in suspension bottom out, loss of control, tire blow out, and the like.

In one embodiment, for example in a truck that is loaded with 500 lbs. of additional weight, when the weight is added to the vehicle, if it is not centered, it will not only cause a change in the front or rear SAG (depending upon the load location fore or aft), but will also cause SAG changes that will differ between the left and right side of the vehicle. For example, if the load is in the rear and off-center to the left, the load-modified ride-height of the vehicle will be lopsided. That is, not only will the rear of the vehicle be lower than the front, but the left-side suspension will also be compressed more than the right-side suspension causing the rear left of the vehicle to have a lower ride-height than the other three corners.

Thus, while the entire rear of the vehicle will be out of SAG and therefore riding lower than the front of the vehicle, it will also be lopsided between the left and right sides. Such lopsided suspension characteristics can be extremely deleterious while driving and will often result in a number of deleterious issues including, but not limited to: steering problems, suspension bottom out, loss of control, tire blowout, and vehicle rollover.

In contrast to the examples above, when the weight on the vehicle (e.g., rider, passengers, cargo, etc.) is less than the expectedly loaded vehicle weight, the suspension and one or more shock assemblies will be less compressed, and the vehicle ride height will be higher than the SAG. This lighter loaded situation can also result in a number of deleterious issues including, but not limited to: improper seat height (e.g., a rider will be higher off the ground than expected), change in vehicle height clearance, suspension top-out, suspension issues caused by the vehicle operating outside of the operating envelope for the suspension, and the like.

Additional information regarding SAG and SAG setup can be found in U.S. Patent 8,838,335 to which reference is specifically made.

A shock assembly often includes a damper body surrounded by or used in conjunction with a mechanical spring or constructed in conjunction with an air spring or both. The shock assembly often consists of a damping piston and piston rod telescopically mounted in a fluid filled cylinder (or damper housing). The damping or working fluid may be, for example, hydraulic oil. A mechanical spring may be a helically wound spring that surrounds or is mounted in parallel with the damper body. As used herein, the terms "down" "up" "downward" upward" "lower" "upper" and other directional references are relative and are used for reference only.

### Overview

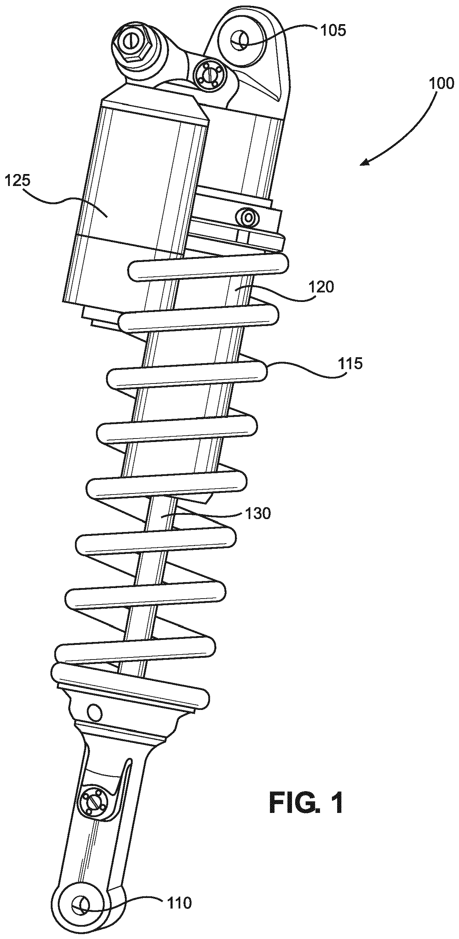

With reference now to Figure 1, a perspective view of a shock assembly 100 is shown in accordance with one embodiment. In one embodiment, shock assembly 100 is a coil sprung shock assembly 100. However, it should be appreciated, in the following discussion, in another embodiment, the shock assembly 100 may be representative of different and/or other types of shock assemblies such as, but not limited to, those used as a front shock assembly, rear shock assembly, etc. In one embodiment, shock assembly 100 includes eyelets 105 and 110, damper housing 120, helical spring 115, piston shaft 130, and piggyback (or external reservoir 125). A configuration of an external reservoir, including a floating piston, is described in U.S. Pat. No. 7,374,028 the content of which is incorporated by reference herein, in its entirety. External reservoir 125 may also be referred to as remote reservoir 125.

In one embodiment, the damper housing 120 (or cylinder 120) includes a chamber with a main piston. In one embodiment, the damper housing 120 includes a base valve comprising a floating piston within the damper housing to separate the working fluid from a pressurized gas, wherein the base valve is used to compensate for a reduction in available volume of the damper housing 120 of the shock assembly 100 as the piston shaft 130 moves into the damper housing 120.

The available fluid volume within a damping chamber changes as the piston shaft moves in and out of the damping chamber. For example, the amount of damping fluid which can be held within the damping chamber is reduced when the shock assembly is completely compressed such that the piston shaft is largely within the damping chamber (thereby displacing damping fluid by the volume of the shaft). In a typical shock assembly, there is a compressible gas volume in fluid communication with the damping chamber to allow the shaft displaced fluid volume to be taken up by compression of the compressible gas volume. Deleteriously, during operation of the shock assembly in rapid compression under relatively high load, the compressible gas volume can be suddenly collapsed (if the pressure induced by the load is much higher than the gas volume pressure and such pressure can be freely communicated to the gas volume) thereby subverting the damping operation of the piston and allowing the piston to fully compress into the damping chamber at a high rate. During such a compression event, damping fluid is not properly transferred to the rebound side of the damping piston and a vacuum is created (or in other words, the pressure is decreasing to vapor pressure) or "pulled" on the rebound side of the piston due to lack of timely fluid back fill. Decreased rebound chamber pressure can drop to or below vapor pressure for a giving fluid, therefore, creating many small vapor bubbles. Those "bubbles" then collapse as the compression rate slows near completion of the loading event which caused the rapid compression. Such vacuum formation and collapse are known as cavitation and that can be both damaging to hardware and quite noisy. It is desirable to prevent such a cavitation event (and the corresponding malfunction of the damper under high load).

This problem may be solved using a device (e.g. a base valve) to meter fluid flow from the compression side of the damping piston to the compressible gas volume.

In different embodiments, a base valve is similar to a piston in that it may have holes, shims and a jet in its center. Often, the base valve is fixed in the damping chamber, usually between the piston and the IFP to create a third chamber therein. Basically, during the compression stroke, the base valve allows the displacement of a volume of working fluid equal to the shaft volume entering the damping chamber, which moves the IFP. However, the base valve also maintains the resistance necessary to force working fluid through the piston. During the rebound stroke, the gas behind the IFP presses outward and working fluid is able to move through the base valve back into the compression chamber.

As such, the base valve allows a decrease (or even elimination) of a pressure of the gas in the shock assembly. Moreover, the base valve prevents cavitation in the working fluid, but doesn't increase the force necessary to move the shaft. This allows the shock assembly to respond better at low shaft speeds, such as for example on a smoother surface, where the shaft isn't moving as quickly as it would if the vehicle were traversing a lot of bumps.

In one embodiment, instead of (or in addition to) the base valve, shock assembly 100 includes the external reservoir 125. In one embodiment, external reservoir 125 includes a floating piston and pressurized gas to compensate for a reduction in volume in the main damper chamber of the shock assembly 100 as the piston shaft 130 moves into the damper body. Fluid communication between the main damper chamber of the shock assembly and the external reservoir 125 may be via a flow channel including an adjustable needle valve. In its basic form, the shock assembly works in conjunction with the helical spring and controls the speed of movement of the piston shaft by metering incompressible fluid from one side of the damper piston to the other, and additionally from the main chamber to the reservoir, during a compression stroke (and in reverse during the rebound or extension stroke).

Although a coil sprung shock assembly 100 is shown in Figure 1, this is provided as one embodiment and for purposes of clarity. In one embodiment, the shock assembly 100 could be a different type such as, but not limited to, an air sprung fluid damper assembly, a stand-alone fluid damper assembly, and the like.

Shock assemblies are used in numerous different vehicles and configurations to absorb some or all of a movement that is received at a first portion of a vehicle before it is transmitted to a second portion of the vehicle. For example, when a wheel hits a pothole, the encounter will cause an impact force on the wheel. However, by utilizing suspension components including one or more shock assemblies, the impact force can be significantly reduced or even absorbed completely before it is transmitted to a person on a seat of the vehicle.

Often shock assemblies consist of at least a cylinder with an inner diameter, a rod movably disposed within the cylinder, and a main damping piston coupled to the rod. The main damping piston is configured to divide the cylinder into a compression side and a rebound side. Such shock assemblies may be monotube, or two concentric cylinders. The main damping piston may be vented or solid. Internal bypasses or external bypasses may also be present.

For additional detail and description of a shock absorber/damper, see, as an example, U.S. Patent 10,576,803 to which reference is specifically made. For additional detail and description of position-sensitive shock absorber/damper, see, as an example, U.S. Patent 6,296,092 to which reference is specifically made.

It should be noted that while some embodiments include shock assemblies, applications are not limited to those of vehicle suspension. Other applications could be a damper used to prevent a car hood from slamming shut, a damper used on a door or lid, dampers used in prosthetics, manufacturing equipment, heavy machinery, etc. Furthermore, while embodiments discussed herein may be in regard to a shock assembly, it should be understood that it is for the sake of clarity and brevity and is not intended to limit the scope of the embodiments.

Furthermore, it should be noted that proportions shown in various figures have been exaggerated for ease of understanding, and should not be taken as limiting.

Temperature variation inside of a shock assembly depends on the number of factors such as materials, geometry, flow patterns, compression and rebound speeds, and the environment the shock absorber is in. Temperature increase during normal shock operation reduces oil viscosity, which in its turn reduces damping capabilities of the shock absorber.

One way to achieve better temperature stability or lower steady state temperature is if the fluid flow exiting the piston can be redirected to the cylinder wall region where increased levels of heat exchange occurs. By doing so, steady state temperature must decrease, which prevents decrease in oil viscosity, therefore improving shock absorber damping capabilities.

In some cases, turbulence can also increase temperature. Turbulence promotes better mixing, and better fluid mixing is desirable for a more uniform temperature gradient across the fluid volume (i.e., better mixing can reduce fluid eddies with large temperature differences). A uniform temperature gradient within fluid domain results in predictable damping results. By improving fluid dynamics there is a reduced level of turbulence. Generally, there will be turbulent flow near the piston and valves at higher velocity, with more laminar flow during low velocity events.

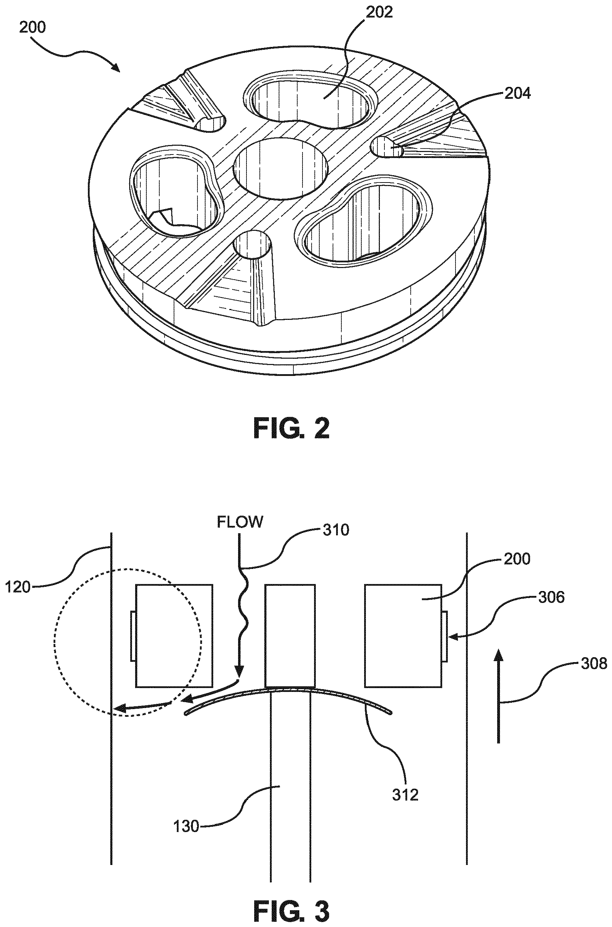

Figure 2 is a perspective view of a damper piston 200 without a fluid ramp, in accordance with an embodiment. Also shown are compression ports 202 and rebound ports 204. It should be noted that the size, shape, and location of compression ports 202 and rebound ports 204 is not limited to the arrangement shown in at least Figure 2 and can be adjusted as necessary.

Figure 3 is a cross sectional view of damper piston 200 without a fluid ramp during a compression stroke, in accordance with an embodiment. Also shown are glide ring 306, directional arrow 308, fluid flow arrow 310, and shim stack 312.

Directional arrow 308 shows the direction of movement for damper piston 200, which is shown to be in a compression stroke. While the system is shown to be in compression, it should be understood that this is for clarity and brevity, and that a rebound stroke applies just as well.

Once fluid is squeezed between surface of the piston and bottom of a seal valve, such as shim stack 312, it can achieve very high momentum/speed. This high speed (or high momentum) flow slams into the walls cylinder 120 normal to the surface (an approximately 90-degree angle), as shown by fluid flow arrow 310. Such contact between high momentum fluid and stationary solid results in high shear forces near the wall of cylinder 120. These shear forces result in audible high pitch "heese" noise. By redirecting flow and preventing normal flow to the cylinder wall the "heese" noise can be reduced in both "key" (note, or tone) and pitch (amplitude or volume), therefore, making the damper quitter.

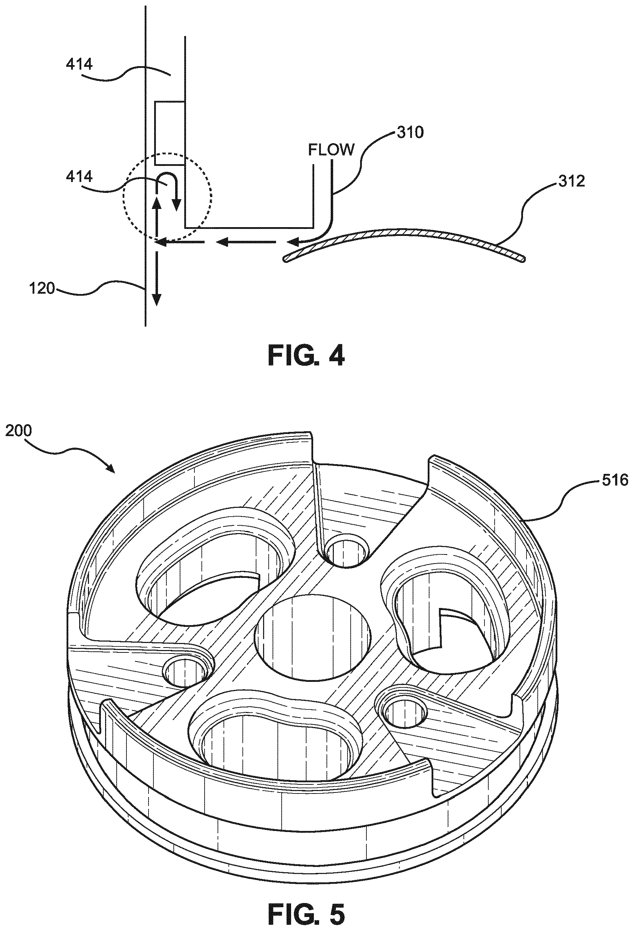

Figure 4 is a close-up view of the cross-sectional view of damper piston 200 without a fluid ramp during a compression stroke, in accordance with an embodiment. Also included is gap 414.

As a damper piston 200 moves within a cylinder 120, or damper housing 120, there is a gap 414 between the damper piston 200 and the inner diameter of cylinder 120 in which the damping fluid can flow in a recirculating pattern. Within this gap, cavitation can occur which also contributes to noise and temperature increase, and in turn decreased performance. Generally, gap 414 existed to reduce the amount or material required to form damping piston 200.

In one embodiment, damper piston has an increased diameter to reduce the size of gap 414. For example, if the size of gap 414 was previously 3.2 mm (1/8^{th} of an inch), then it would be reduced to approximately 1.0 mm (1/25^{th} of an inch) or 1.3 mm (1/20^{th} of an inch). The decrease in gap 414 would aid in noise mitigation and reduce the amount of cavitation, even without fluid ramp 516.

Figure 5 is a perspective view of a damper piston 200 with a fluid ramp 516, in accordance with an embodiment.

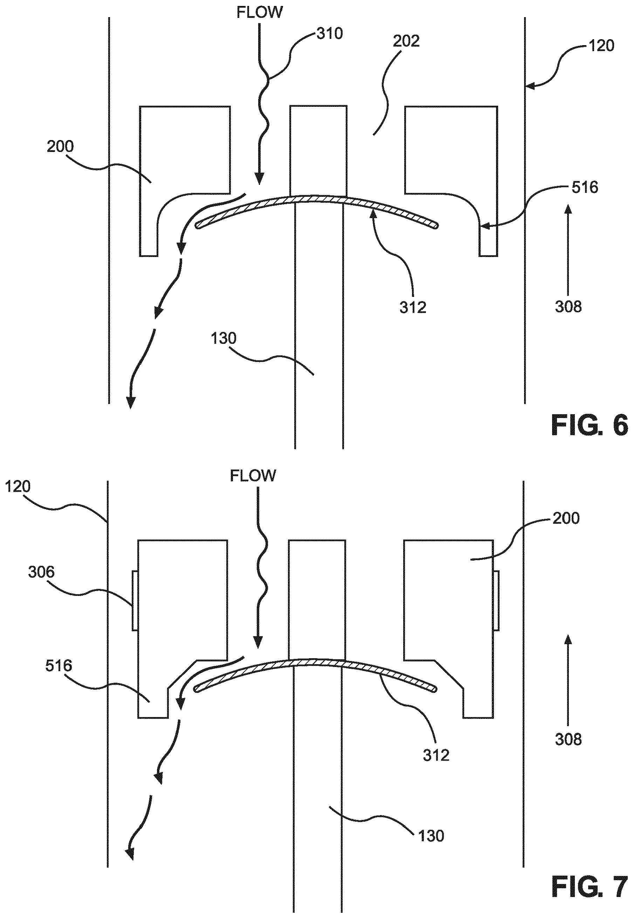

In order to redirect fluid flow, avoiding normal top surface contact, and inject it into the near wall region (called the boundary layer) a "fluid ramp" or "fluid skirt," as seen in at least Figure 5, is used. Fluid ramp 516 redirects the flow by providing a smooth turning transition between the piston exit and the walls of damper. Therefore, flow is being redirected to be inserted into the boundary layer that sits near the wall of cylinder 120, further improving heat exchange with the walls of the damper and reducing concentrated shear force at the point of contact. By varying the angle of fluid ramp 516 (or radius) the flow path can be altered, which results in different amplitudes of the heese noise. Adding a fluid ramp to the piston does not reduce damper performance, but rather increases it by improving fluid dynamics within the piston area. Figures 6-9 show different embodiments of fluid ramp 516 with varying angles and structures.

Once oil is traveling through the channels of damper piston 200 it will start exiting and turning toward the fluid ramp 516. In one embodiment, fluid ramp 516 will redirect the flow by turning it approximately 90 degrees and injecting fluid flow into the boundary layer. In one embodiment, fluid ramp 516 will redirect the flow by turning it less than 90 degrees and injecting fluid flow into the boundary layer. In one embodiment, fluid ramp 516 will redirect the flow by turning it such that the fluid will not hit normal to the wall of cylinder 120 and injecting fluid flow into the boundary layer.

Figure 6 is a cross section view of a damper piston 200 with a fluid ramp 516 during a compression stroke, in accordance with an embodiment. In one embodiment, fluid ramp 516 is a curved ramp that redirects fluid flow at an approximately 90-degree angle.

Figure 7 is a cross section view of a damper piston 200 with a fluid ramp 516 during a compression stroke, in accordance with an embodiment. In one embodiment, fluid ramp 516 utilizes a plurality of angled surfaces to redirect fluid flow such that fluid does not hit the wall of cylinder 120 normal to the wall.

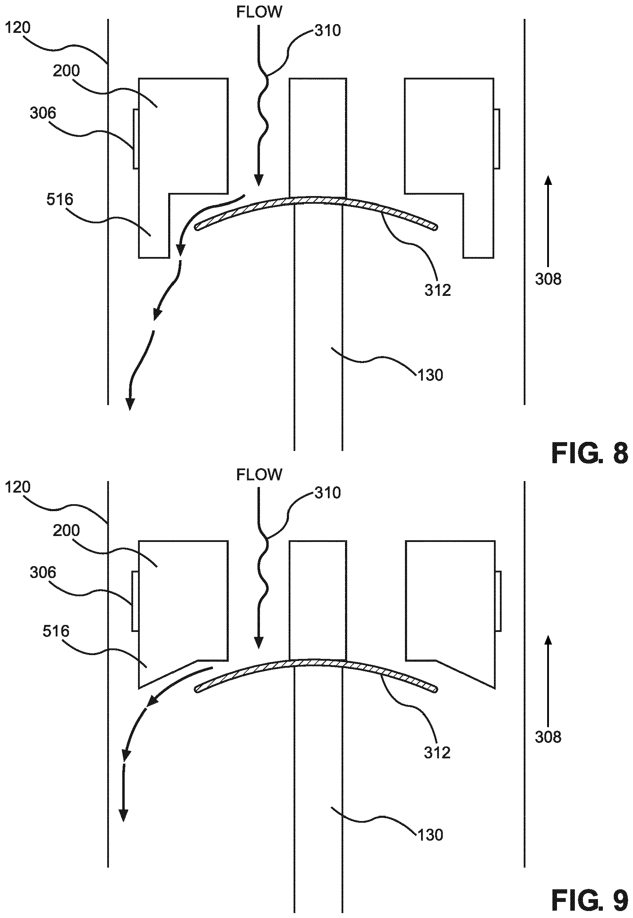

Figure 8 is a cross section view of a damper piston 200 with a fluid ramp 516 during a compression stroke, in accordance with an embodiment. In one embodiment, fluid ramp 516 is a squared surface that redirects fluid flow at an approximately 90-degree angle.

Figure 9 is a cross section view of a damper piston 200 with a fluid ramp 516 during a compression stroke, according to an embodiment. In one embodiment, fluid ramp 516 utilizes at least one angled surface to redirect fluid flow such that fluid does not hit the wall of cylinder 120 normal to the wall.

It should be understood that the embodiments shown in at least Figures 6-9 are not intended to limit the form of fluid ramp 516, rather show possible examples. In one embodiment, fluid ramp 516 is any shape that results in the fluid jet being turned from its exiting velocity vector to other directions. In one embodiment, fluid ramp 516 is any shape that creates an angled exit for the fluid exiting damper piston 200. In one embodiment, fluid ramp 516 consists of waves or bumps along the face of damper piston 200 that alter the fluid flow. In one embodiment, fluid ramp 516 consists of a round ramp (such as shown in at least Figure 6). In one embodiment, fluid ramp 516 consists of a beveled ramp (such as shown in at least Figure 7). In one embodiment, fluid ramp 516 consists of a square ramp (such as shown in at least Figure 8).

In one embodiment, fluid ramp 516 is a part of damper piston 200 and is made from the same material. In one embodiment, fluid ramp 516 is a part of damper piston 200 and is made from a different material (e.g., aluminum, steel, titanium, hard wood, etc.). In one embodiment, fluid ramp 516 is an added feature to the piston 200. In one embodiment, fluid ramp 516 can be attached to legacy components as a modification to a pre-existing assembly. In one embodiment, fluid ramp 516 is mounted to the piston shaft 130.

In one embodiment, fluid ramp 516 and damper piston 200 are a singular component. In one embodiment, fluid ramp 516 is an added feature that is attached to damper piston 200 (e.g., bolted, glued, snapped together, or attached in other ways that makes it perform as single unit).

In one embodiment, fluid ramp 516 is present on a single side of damper piston 200 (e.g., compression side or rebound side). In one embodiment, fluid ramp 516 is present on both sides of damper piston 200. In one embodiment, a fluid ramp is on a first side of the damper piston, the fluid ramp being of a shape that creates an angled exit for fluid exiting the damper piston. In one embodiment, a second fluid ramp is on a second side of the damper piston, the second fluid ramp being of a shape that creates an angled exit for fluid exiting the damper piston.

In one embodiment, fluid ramp 516 is present all around the edge of damper piston 200 (in other words, all 360 degrees). In one embodiment, fluid ramp 516 is not present all around the entire edge of damper piston 200 rather the locations are based on where fluid flows when exiting the ports (compression ports 202 or rebound ports 204). In other words, dimensions vary based on the size of the channels (compression ports 202 and rebound ports 204), and overall piston geometry.

In one embodiment, a maximum allowable radius of fluid ramp 516 is used. With a larger radius, the amount of noise mitigation is increased. The vertical length of fluid ramp 516, starting from the top surface of the piston, can be as little as half of the chosen fluid ramp 516 radius (in the case of round ramp such as the embodiment shown in at least Figure 6) and as tall as the thickness of the piston. In the case of chamfer ramp, such as the one shown in at least Figure 7, the vertical length of fluid ramp 516 at its shortest can be sin(a)*hypotenuse, and as tall as the thickness of the piston.

Horizontal coverage of the fluid ramp 516 (arc length of the ramp) can be as long as covering full circumference of the piston (maximum arc length 2πr), and as minimum as arc length of ½ of the piston channel diameter. In one embodiment, horizontal coverage is 150% of channel diameter (for round channel), and for non-round piston channel hydraulic diameter is used instead of regular diameter (Dₕ= 4A/P, where A - channel wetted area, P - channel perimeter). It should be understood that the dimensions stated are not intended to limit the scope, rather are given as examples for the sake of clarity.

One benefit of fluid ramp 516 is that the noise caused by the impact of fluid against the wall of cylinder 120 is greatly reduced (for example, 70-80% reduction). The heat generated during this impact is also reduced by redirecting the fluid. For example, the redirection can drop the speed of the fluid by about 75% by the time the fluid hits the wall of cylinder 120 compared to the speed without fluid ramp 516. Furthermore, with the redirection, fluid flow can merge more seamlessly with the boundary layer along the wall of cylinder 120, so both turbulence and heat generation are reduced. With the smoother integration into the boundary layer, the heat exchange with the wall and outside environment is improved.

Fluid ramp 516 also reduces the amount of fluid flowing into gap 414, which can cavitate.

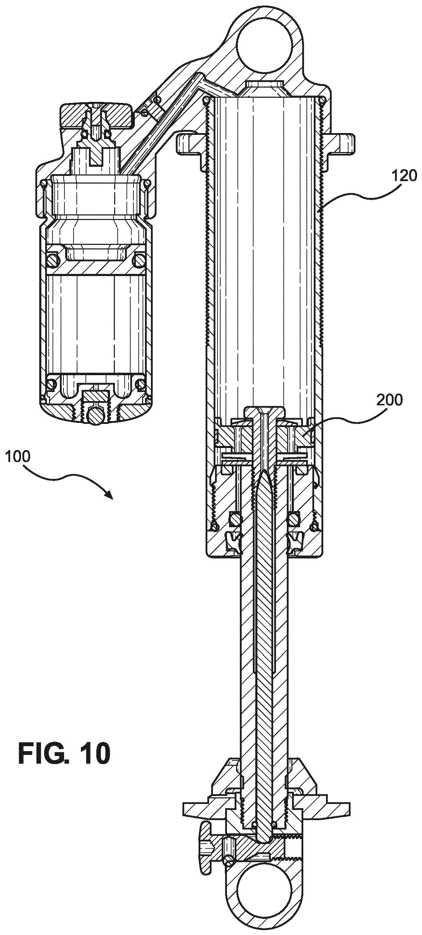

Figure 10 is a cross section view of a shock assembly 100 with a damper piston 200 with a fluid ramp 516, according to an embodiment. In one embodiment, a shock assembly 100 utilizes a damper piston 200 with a fluid ramp 516. Again, while damper piston 200 can be utilized by a shock assembly as shown in at least Figure 10, damper piston can easily be applied to applications other than shock assemblies and vehicle suspension.

In the embodiment of Figure 10 damper piston is shown to have a fluid ramp 516 that redirects fluid during a rebound stroke. Other embodiments include a damper piston 200 with a fluid ramp 516 on both sides, or a damper piston 200 with a fluid ramp 516 on the side that would redirect fluid flow during a compression stroke.

The examples set forth herein were presented in order to best explain, to describe particular applications, and to thereby enable those skilled in the art to make and use embodiments of the described examples. However, those skilled in the art will recognize that the foregoing description and examples have been presented for the purposes of illustration and example only. The description as set forth is not intended to be exhaustive or to limit the embodiments to the precise form disclosed. Rather, the specific features and acts described above are disclosed as example forms of implementing the Claims.

Reference throughout this document to "one embodiment," "certain embodiments," "an embodiment," "various embodiments," "some embodiments," "various embodiments", or similar term, means that a particular feature, structure, or characteristic described in connection with that embodiment is included in at least one embodiment. Thus, the appearances of such phrases in various places throughout this specification are not necessarily all referring to the same embodiment. Furthermore, the particular features, structures, or characteristics of any embodiment may be combined in any suitable manner with one or more other features, structures, or characteristics of one or more other embodiments without limitation.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A fluid redirection system comprising:
a damper piston, the damper piston having a plurality of compression ports and a plurality of rebound ports; and
a fluid ramp on a first side of the damper piston, the fluid ramp being of a shape that creates an angled exit for fluid exiting the damper piston.

2. The fluid redirection system of Claim 1, wherein the fluid ramp comprises a round ramp.

3. The fluid redirection system of Claim 1, wherein the fluid ramp comprises a bevelled ramp.

4. The fluid redirection system of Claim 1, wherein the fluid ramp consists of a square ramp.

5. The fluid redirection system of any of Claims 1 to 4, wherein the fluid ramp is not present all around the entire edge of the damper piston but rather at a location or locations based on where fluid flows when exiting the plurality of compression ports and the plurality of rebound ports.

6. The fluid redirection system of any preceding Claim, wherein the fluid ramp is configured so that, in use, fluid flow is redirected to merge more seamlessly with the boundary layer along a wall of a cylinder than without the fluid ramp.

7. The fluid redirection system of any preceding Claim, further comprising a second fluid ramp on a second side of the damper piston, the second fluid ramp being of a shape that creates an angled exit for fluid exiting the damper piston.

8. The fluid redirection system of Claim 7, wherein the second fluid ramp comprises a round ramp.

9. The fluid redirection system of Claim 7, wherein the second fluid ramp consists of a beveled ramp.

10. The fluid redirection system of Claim 7, wherein the second fluid ramp consists of a square ramp.

11. The fluid redirection system of Claim 7, 8, 9 or 10, wherein the second fluid ramp is not present all around the entire edge of the damper piston but rather at a location or locations based on where fluid flows when exiting the plurality of compression ports and the plurality of rebound ports.

12. The fluid redirection system of any of Claims 7 to 11, wherein the fluid ramp is configured so that, in use, fluid flow is redirected to merge more seamlessly with the boundary layer along a wall of a cylinder than without the fluid ramp.

13. A suspension system comprising:
a cylinder, said cylinder comprising a wall;
a piston shaft; and
a fluid redirection system as claimed in any of Claims 1 to 12.

14. A suspension-inclusive device comprising a fluid redirection system as claimed in any of Claims 1 to 12.

15. A vehicle comprising a fluid redirection system as claimed in any of Claims 1 to 12.
